# DEMANDE DE BREVET EUROPEEN

(11) **EP 4 159 882 A1**
(43) Date de publication de la demande: **05.04.2023**
(21) Numéro de dépôt: 22198775.3
(22) Date de dépôt: 29.09.2022
(51) Int. Cl.: C22B 11/00, B09B 3/00, C22B 11/06, C22B 3/44

(54) **PROCÉDÉ DE RÉCUPÉRATION DE L'ARGENT CONTENU DANS DES PARTICULES PROVENANT, PAR EXEMPLE, DE CELLULES PHOTOVOLTAÏQUES**

(30) Priorité: 01.10.2021 FR 2110409
(71) Demandeur: Commissariat à l'énergie atomique et aux énergies alternatives, 75015 Paris (FR)
(72) Inventeur: BILLY, Emmanuel, 38054 Grenoble Cedex 9 (FR)
(74) Mandataire: Brevalex

(57) **Abrégé**

Procédé de récupération de l'argent contenu dans des particules, provenant, par exemple, d'un broyat de cellules photovoltaïques, le procédé comprenant les étapes successives suivantes :
i) plonger des particules contenant de l'argent dans une solution comprenant un solvant eutectique profond et un médiateur redox, moyennant quoi on forme des ions argent en solution,
ii) séparer les particules de la solution contenant les ions argent,
iii) réaliser une électrolyse de la solution, moyennant quoi on réduit les ions argent et on régénère le médiateur redox.

## Description

### DOMAINE TECHNIQUE

La présente invention se rapporte au domaine général du recyclage des panneaux photovoltaïque.

L'invention concerne plus particulièrement un procédé de récupération de l'argent à partir d'un panneau photovoltaïque, contenant par exemple des cellules photovoltaïques en silicium cristallin.

L'invention est particulièrement intéressante puisqu'elle permet de valoriser l'argent présent dans les cellules photovoltaïques par voie de chimie verte.

### ÉTAT DE LA TECHNIQUE ANTÉRIEURE

Actuellement, le recyclage des panneaux photovoltaïques (PV) est devenu un enjeu majeur depuis le 13 août 2012 puisque, à cette date, la Directive relative aux Déchets d'Equipements Electriques et Electroniques (DEEE) a été étendue aux panneaux photovoltaïques (PV).

Aujourd'hui, 90% des panneaux existants sont en silicium cristallin (les 10% restants sont des panneaux solaires en couche mince). Un module photovoltaïque en silicium est majoritairement composé de verre (74% du poids total), d'aluminium (10%), de polymère (environ 6,5%) et de silicium (environ 3%). Les métaux (zinc, plomb, cuivre et argent) ne représentent qu'une part négligeable de la masse totale du panneau photovoltaïque.

Les objectifs minimaux de valorisation et de recyclage sont donc photovoltaïques aisément atteints par la seule récupération du verre et du cadre en aluminium.

Les procédés actuels se concentrent sur le démantèlement des modules par voie chimique ou thermique puis sur le recyclage des différents éléments grâce à des voies de retraitement spécialisées.

L'argent représente le métal constituant la plus forte valeur ajoutée (près de 90% de la valeur de la cellule). C'est pourquoi, la récupération de l'argent représente un enjeu majeur pour pérenniser la filière de recyclage.

Classiquement, les cellules photovoltaïques des modules phtovoltaïques sont traitées chimiquement par dissolution totale des éléments métalliques (Cu, Ag, Sn, Pb, Al,..), des anti-réfléchissants et de la couche n-dopée pour récupérer le silicium. La dissolution peut être réalisée dans des bains de traitement composés de divers acides concentrés en mélange et souvent portés à ébullition. Cependant, ces solutions sont nocives et dangereuses.

C'est pourquoi, les travaux les plus récents mettent en œuvre des liquides ioniques pour dissoudre et/ou récupérer les éléments.

Par exemple, il a été démontré qu'il est possible de récupérer l'argent par électrodéposition à partir de solutions contenant des sels d'argent et des liquides ioniques chloroaluminates [1] ou dans des liquides ioniques de type chlorure de choline [2]. L'argent est électrodéposé sur différents substrats, comme par exemple sur des substrats en Pt, Au, W ou en carbone vitraux (GC).

Concernant la dissolution, peu de travaux s'intéressent à la lixiviation de l'argent et des métaux en milieu liquide ionique. Parmi ces travaux, on peut citer la dissolution d'argent (et de divers métaux Au, Cu, Zn, Pb, Fe) à partir d'un minerais de chalcopyrite en milieu liquide ionique [3]. Ces travaux traitent de l'étude du rendement de lixiviation de l'or et de l'argent dans une solution liquide ionique ([BMIM][HSO₄]) contenant des ions Fe³⁺ et de la thio-urée.

Plus récemment, les effets de la lixiviation dans un liquide ionique protique ([BMlM][HSO₄]) en mélange avec de l'eau (sur le même minerai) ont été étudiés [4]. Aucun résultat n'est mentionné vis à vis de l'argent, seuls les rendements de dissolution du cuivre et du fer sont discutés. Les résultats indiquent une augmentation de la dissolution de ces métaux avec la teneur en eau, ce qui s'explique par l'augmentation conjointe en protons et dioxygène dissous.

Récemment, il a été démontré qu'il est possible de réaliser la dissolution chimique et la récupération électrochimique de l'argent dans des liquides ioniques en présence d'un médiateur redox avec un procédé en deux étapes [5]. Dans une première étape, l'argent est dissout dans une solution comprenant un liquide ionique et un médiateur redox. Cette solution assure la dissolution chimique de l'argent sous condition atmosphérique (air). Dans une seconde étape, l'argent est récupéré par électrolyse sous forme métallique. Simultanément au dépôt d'argent, le médiateur redox est régénéré dans le milieu liquide ionique.

Cependant, le procédé utilise des liquides ioniques qui sont couteux et qui ne sont pas biodégradables.

Actuellement, les procédés mis en œuvre pour la récupération de l'argent sont complexes, couteux, consommateurs de réactifs et/ou dangereux et, par conséquent, induisent un coût économique et environnemental important.

Ainsi, aucun des procédés actuels ne permet la dissolution et récupération de l'argent de manière satisfaisante.

### EXPOSÉ DE L'INVENTION

Un but de la présente invention est de proposer un procédé de récupération de l'argent présent dans un support, par exemple un module photovoltaïque à recycler, le procédé devant être simple à mettre en œuvre, peu coûteux et ne nécessitant pas l'utilisation de produit toxique pour l'environnement et/ou pour la santé des personnes mettant en œuvre le procédé.

Pour cela, la présente invention propose un procédé de récupération de l'argent contenu dans des particules, provenant, par exemple, d'un broyat de cellules photovoltaïques, le procédé comprenant les étapes successives suivantes :
i) plonger des particules contenant de l'argent dans une solution comprenant un solvant eutectique profond et un médiateur redox, moyennant quoi on forme des ions argent en solution,
ii) séparer les particules de la solution contenant les ions argent,
iii) réaliser une électrolyse de la solution, moyennant quoi on réduit les ions argent et on régénère le médiateur redox.

L'invention se distingue fondamentalement de l'art antérieur par l'utilisation de solvants eutectiques profonds (ou DES pour « Deep Eutectic Solvents » en anglais).

Les propriétés des DES sont extrêmement différentes de celles de liquides ioniques en terme de conductivité, viscosité, température de décomposition, fenêtre électrochimique et solubilité des oxydes.

Les DES sont des solvants formés par le mélange de deux ou plusieurs composés en une proportion exacte qui correspond au point eutectique. La plupart de ces solvants sont liquides à température ambiante, ce qui facilite leur utilisation. Les DES sont non-volatiles, ininflammables et chimiquement stables à des températures allant jusqu'à 200 °C.

La synthèse des DES est facile et propre comparativement à celle des liquides ioniques qui ont besoin de plusieurs étapes de synthèse chimique et de purification. Les DES sont obtenus par simple mélange des produits composant le DES dans les bonnes proportions, éventuellement, avec chauffage du mélange, jusqu'à l'obtention d'un liquide homogène et transparent. Les DES sont formés d'un couple comprenant un donneur de liaison hydrogène et un accepteur de cette liaison.

La préparation des DES ne nécessite aucune réaction chimique et, par conséquent, le rendement de production est de 100%. Il s'agit d'un simple mélange des produits composant le DES en bonne proportion avec chauffage, jusqu'à l'obtention d'un liquide homogène et transparent.

Les DES permettent de dissoudre et récupérer l'argent par voie de chimie verte, contrairement aux procédés mettant en œuvre des liquides ioniques.

Selon un mode réalisation avantageux, le solvant eutectique profond est formé d'un chlorure de choline et d'un donneur de liaison hydrogène, notamment un glycol comme l'éthylène glycol.

Selon un autre mode de réalisation avantageux, le solvant eutectique profond est un solvant eutectique profond naturel (NADES). Par exemple, il peut s'agir de de l'acide malique:glucose ou de l'acide citrique:saccharose.

Avantageusement, les étapes i), ii) et iii) sont réalisées, sous air, à une température comprise entre 20°C et 100°C, de préférence entre 20°C et 80°C.

Par entre X et Y, on entend ici et par la suite que les bornes X et Y sont comprises dans l'intervalle.

Avantageusement, le substrat est sous forme particulaire.

Avantageusement, le médiateur rédox a une concentration comprise entre 0,1 et 2 mol/L, de préférence entre 0,1 et 0,5mol/L.

Avantageusement, le médiateur rédox est choisi parmi le fer, le manganèse, le cobalt, le chrome, le vanadium, l'étain, l'argent, le cuivre, le ruthénium, le chlore, le brome et l'iode. On choisira en particulier le médiateur rédox parmi Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺, Cl⁻/Cl₃⁻, Br₂/Br⁻, I⁻/I₃⁻ et Fe²⁺/Fe³⁺.

Avantageusement, le médiateur rédox est un sel métallique, et plus particulièrement un sel de fer (III) ou un sel de cuivre (II) pour obtenir, respectivement, Fe²⁺/Fe³⁺ et/ou Cu⁺/Cu²⁺. Il peut également s'agir d'un de leurs mélanges.

Avantageusement, la solution contient un additif, tel que de l'eau, pour améliorer les conditions de transport (viscosité, conductivité ionique).

Avantageusement, les particules proviennent d'un broyat de cellule photovoltaïque en silicium cristallin ou en silicium polycristallin. Les particules peuvent également provenir d'un connecteur électrique contenant de l'argent.

Avantageusement, la solution contient en outre de l'eau, le pourcentage molaire de l'eau par rapport au solvant eutectique profond étant de préférence inférieur à 50%.

Avantageusement, préalablement à l'étape i), le procédé comporte en outre les étapes suivantes :
a) fournir un panneau photovoltaïque comprenant des câbles, une boîte de jonction, un cadre métallique, des cellules photovoltaïques encapsulées dans une couche de polymère et des connecteurs électriques,
b) éliminer les câbles, la boîte de jonction et le cadre métallique du panneau photovoltaïque,
c) réaliser un traitement thermique et/ou chimique ou mécanique pour retirer la couche de polymère encapsulant les cellules photovoltaïques,
d) broyer les cellules photovoltaïques et/ou les connecteurs électriques, de manière à former des particules contenant de l'argent,
e) de préférence, réaliser une étape de désaluminisation sur les particules contenant l'argent, l'étape de désaluminisation étant réalisée dans une solution acide à un pH compris entre 1 et 4.

Le procédé présente de nombreux avantages :
- le procédé permet de coupler, d'une part, la dissolution et, d'autre part, l'électrodéposition de l'argent et la régénération du médiateur rédox en une étape unitaire,
- le médiateur redox se régénère contrairement aux réducteurs conventionnels qui se dégradent durant la réaction de dissolution (comme c'est par exemple le cas pour HNO₃ qui entraîne la génération et la consommation irréversible des nitrates avec formation de NOₓ),
- le DES étant conducteur ionique, il n'y a pas besoin d'apporter en plus d'un sel conducteur pour assurer la conduction ionique durant l'étape d'électrolyse,
- l'utilisation de DES permet de surmonter les problèmes de solubilité et stabilité (dégradation chimique) du complexant (ex : thio-urée, thiosulfate, etc...) et d'induire l'espèce active en très forte concentration (entre 0,1 et 2 mol.L⁻¹) favorisant la cinétique de dissolution du métal,
- le médiateur redox ne se co-dépose pas avec l'argent, permettant une récupération complète et pure de l'argent,
- le médiateur redox est régénéré sans dégradation et sans pollution du DES,
- le médiateur redox se trouve facilement dans le commerce (notamment les sels à base de Fe³⁺ et Cu²⁺),
- le procédé ne nécessite pas d'utiliser de solution acide ni de liquide ionique,
- l'utilisation de DES (et sa réutilisation éventuelle) permet d'éliminer les étapes de traitement du solvant, ce qui réduit les coûts,
- les DES sont biodégradables, ce qui réduit les contraintes liés aux normes de sécurité et/ou environnementales,
- le procédé ne dégage pas de gaz nocifs et ne dégrade pas le milieu réactionnel,
- le procédé peut être réalisé sous condition atmosphérique (sous air),
- le procédé peut être réalisé à température ambiante (typiquement 25°C), ce qui évite l'apport d'énergie thermique,
- les DES sont des solvants peu chers, ce qui réduit les coûts du procédé,
- les DES sont faciles à préparer et peuvent donc être préparer *in situ.*

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

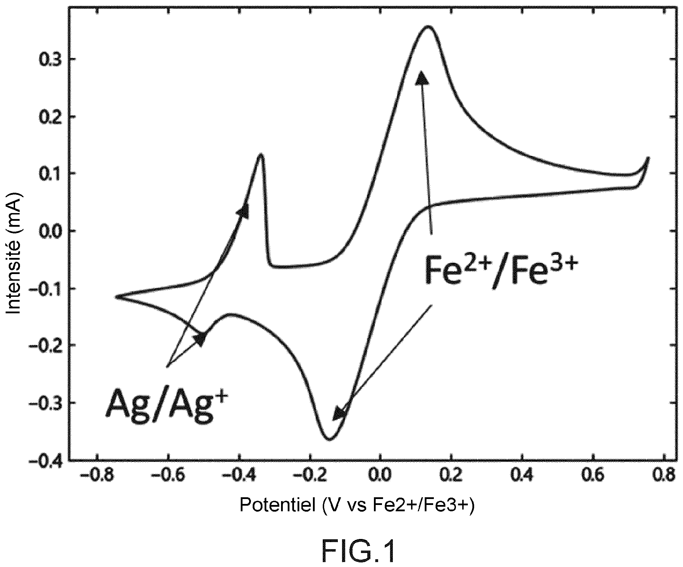

La présente invention sera mieux comprise à la lecture de la description d'exemples de réalisation, donnés à titre purement indicatif et nullement limitatif, en faisant référence à la figure 1 annexée.

Figure 1 représente une courbe intensité-potentiel sur une électrode de platine (50 mV s⁻¹) avec une solution d'Ethaline (1:2) et 0.25 mol kg FeCl₃.6H₂0 après lixiviation de l'argent, selon un mode de réalisation particulier de l'invention.

### EXPOSÉ DÉTAILLÉ DE MODES DE RÉALISATION PARTICULIERS

Par la suite, même si la description fait référence à la valorisation de panneaux ou modules photovoltaïques ; l'invention est transposable à d'autres substrats contenant de l'argent et notamment à des déchets d'équipements électriques et électroniques (DEEE), à des cartes électroniques.

Le panneau photovoltaïque à recycler comprend des câbles, une boîte de jonction et un cadre métallique, une couche de polymère (typiquement en éthyle vinyle acétate (EVA)) et des éléments contenant de l'argent : des cellules photovoltaïques et des connecteurs électriques.

Les cellules photovoltaïques peuvent être en silicium cristallin, en silicium poly-cristallin, ou encore en pérovskite. Les électrodes des cellules photovoltaïques sont, par exemple, réalisées avec une pâte de métallisation en argent, Les connecteurs sont, par exemple, formés d'un cœur en cuivre enrobé de Sn62Pb36Ag2.

Le procédé de recyclage permet de récupérer l'argent contenu dans ces éléments. Le procédé de recyclage comprend les étapes suivantes :
a) fournir un panneau photovoltaïque,
b) éliminer les câbles, la boîte de jonction et le cadre métallique du panneau photovoltaïque,
c) réaliser un traitement thermique, chimique et/ou mécanique pour retirer la couche de polymère encapsulant les cellules photovoltaïques et les connecteurs électriques,
d) broyer les éléments contenant de l'argent (cellules photovoltaïques et/ou connecteurs électriques), de manière à former des particules contenant de l'argent,
e) de préférence, réaliser une étape de désaluminisation en condition douce dans une solution modérément acide (pH compris entre 1 et 4), contenant au moins un acide, moyennant quoi on dissout l'aluminium présent dans les particules,
f) récupération de l'argent contenu dans les particules, selon les étapes successives suivantes :
   i) plonger des particules contenant l'argent dans une solution comprenant un solvant eutectique profond et un médiateur redox, moyennant quoi on forme des ions argent en solution,
   ii) séparer les particules de la solution contenant les ions argent,
   iii) réaliser une électrolyse de la solution, moyennant quoi simultanément on réduit les ions argent sous la forme d'argent métal et on régénère le médiateur redox.

Le procédé est plus particulièrement décrit pour un panneau photovoltaïque mais plusieurs panneaux photovoltaïques pourraient être traités simultanément.

Les étapes b) et c) permettent de séparer et désolidariser les cellules photovoltaïques ainsi que les connecteurs électriques contenant de l'argent des autres éléments du panneau photovoltaïque. Une fois les cellules photovoltaïques désolidarisées, elles sont avantageusement déconnectées les unes des autres et, éventuellement, des connecteurs électriques ne contenant pas d'argent.

A l'issue des étapes b) et c), les éléments d'intérêt du panneau photovoltaïque ont été récupérés.

Lors de l'étape d), on forme un broyat formé de particules contenant de l'argent. L'argent est sous forme solide. Les particules peuvent avoir différentes dimensions selon les conditions de broyage choisies. Elles seront néanmoins suffisamment petites pour avoir une grande surface spécifique et être dissoutes dans la solution de dissolution plus facilement. Elles auront, avantageusement, une taille inférieure à 1 centimètre. La taille correspond à la dimension la plus importante de la particule, généralement le diamètre ou la longueur.

L'étape e) permet de retirer l'aluminium des particules. Pour cela, le broyat est plongé dans une solution acide, ayant un pH allant de 0 à 4, pour dissoudre l'aluminium présent dans la cellule photovoltaïque et le séparer du broyat. Le rapport solide/liquide est compris entre 1% et 45%, et de préférence, le rapport solide/liquide est compris entre 1% et 30%. Ce ratio est noté S/L. Préférentiellement, le ratio S/L est de l'ordre de 10%. Par 10%, on entend 10%±1%. La phase solide correspond à l'aluminium à dissoudre. La phase liquide correspond à la solution acide. Ce ratio correspond à la masse de solide, en grammes, divisée par le volume de la solution, en millilitres. Ainsi, un ratio S/L compris entre 1% et 30% correspond à une concentration massique de l'oxyde métallique dans la solution acide compris entre 0,01 g/mL et 0,3g/mL. Pour des valeurs S/L inférieures à 1%, le rendement de dissolution est également élevé. Cependant, la quantité d'acide utilisée est considérablement élevée par rapport à la quantité de métal à dissoudre, et la quantité de réactifs perdus est conséquente. La température de la solution acide est, avantageusement, comprise entre 15°C et 80°C, et de préférence entre 15°C et 40°C. Elle est, par exemple, de l'ordre de 25°C pour minimiser la toxicité et réduire la consommation énergétique du procédé. L'argent n'est pas ou très peu dissous dans la solution acide. On considère que la dissolution de l'argent est négligeable lors de cette étape.

Lors de l'étape e), le ou les acides utilisés sont de préférence choisis parmi les acides minéraux, notamment acide sulfurique et acide chlorhydrique.

Un asservissement peut être réalisé pour maintenir le pH entre 1 et 4.

Ce traitement permet de désaluminiser la poudre de particules et ainsi améliorer la pureté du produit obtenu.

Lors de l'étape f), les particules sont traitées avec une solution comprenant un solvant eutectique profond et un médiateur redox. Cette étape conduit à la dissolution de l'argent, tout en évitant l'émission de gaz (inflammabilité, volatilité) et/ou la dégradation de la solution.

De manière générale, les DES peuvent être regroupés selon IV familles différentes:
- Type I : Sel quaternaire + Chlorure de métal
- Type II : Sel quaternaire + Chlorure de métal hydraté
- Type III : Sel quaternaire + Donneur de liaison d'hydrogène
- Type IV : Chlorure de métal hydraté + Donneur de liaison d'hydrogène

Les solvants eutectiques profonds sont, par exemple, à base de mélanges de sels d'ammonium quaternaire avec des donneurs de liaison hydrogène tels que des amines et des acides carboxyliques.

Avantageusement, le DES est formé du chlorure de choline en association avec un donneur de liaison hydrogène, avantageusement, d'une très faible toxicité, comme le glycérol, l'éthylène glycol ou l'urée. De tels DES sont non toxiques et obtenus à très faible coût.

De préférence, le DES est formé du chlorure de choline en association avec l'éthylène glycol. Ce DES présente de très bonnes propriétés de transport (viscosité et conductivité ionique), ce qui est particulièrement favorable au procédé de traitement. Avantageusement, on choisira des rapports molaires chlorure de choline / éthylène glycol compris entre 1 :2 et 1 :4. Par 'compris entre', on entend que les bornes sont incluses.

De préférence, le cation du DES est stable jusqu'à un potentiel cathodique suffisamment important pour envisager un dépôt électrochimique d'argent. Son association répond aux exigences de stabilité thermique (> 200 °C) et chimique (pas d'hydrolyse). Il est liquide à température ambiante ou au voisinage (< 100 °C) avec de nombreuses associations.

Selon une variante de réalisation avantageuse, le DES est un solvant eutectique profond naturel (ou NADES pour "Natural Deep Eutectic Solvents"). Il s'agit d'une sous-catégorie de DES à base de produits naturels pouvant être établie, ils possèdent le nom étant préparés en mélangeant des constituants naturels. On va retrouver des mélanges de type acides organiques, sucres, choline, urée, acides aminés.

La solution peut contenir un ou plusieurs médiateurs rédox (par exemple deux médiateurs redox). On entend par médiateur redox, un ion en solution capable d'être réduit lors de l'étape de dissolution et oxydé lors de l'électrolyse.

Le médiateur redox est, avantageusement, Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺, Cl⁻/Cl₃⁻, Br₂/Br⁻, I⁻/I₃⁻, ou Fe²⁺/Fe³⁺, et avantageusement avec Fe²⁺/Fe³⁺ et/ou Cu⁺/Cu²⁺. Le médiateur rédox peut être seul ou en mélange. Ces médiateurs redox sont solubles dans leurs deux états d'oxydation, ils ne sont pas toxiques, ils ne dégradent pas le DES et ils ont des potentiels redox adéquats.

De préférence, le médiateur redox est un sel métallique dissous en solution. Le sel métallique est, de préférence, un sel de fer (III), par exemple du FeCl₃, ou un sel de cuivre (II), comme du sulfate de cuivre (II).

Ces médiateurs redox ont des potentiels redox adéquats. Par adéquat, on entend que les potentiels redox des couples sont suffisamment élevés. Ces médiateurs redox ne se déposent pas avec l'argent lors de l'électrodéposition. Ils restent en solution, ce qui autorise une récupération complète de l'argent sous forme pure.

L'introduction de la poudre désaluminisée dans le DES entraîne la dissolution immédiate de l'argent par un mécanisme redox avec le médiateur. L'étape de dissolution est réalisée à une température entre 15°C et 80°C, et de préférence entre 15°C et 40°C, par exemple à température ambiante, c'est-à-dire de l'ordre de 25°C. Il n'y a, avantageusement, pas besoin d'apport d'énergie thermique pour réaliser la dissolution de l'argent. Toutefois, une augmentation de la température peut être, avantageusement, réalisée pour améliorer la vitesse de dissolution sans dégradation du milieu (pour des températures comprises entre 15 et 80°C).

Le rapport solide/liquide, lors de la dissolution de l'argent, est compris entre 1% et 45%, et de préférence, le rapport solide/liquide est compris entre 1% et 30%. Préférentiellement, ce rapport est de l'ordre de 10%. Par 10%, on entend 10%±1%. La phase solide correspond à l'argent. La phase liquide correspond à la solution.

Optionnellement, la solution peut comprendre un agent desséchant, et/ou un agent favorisant le transport de matière (viscosité, conductivité ionique). Par exemple, il s'agit de l'eau. Le pourcentage de l'eau par rapport au DES est, avantageusement, inférieur à 50% molaire, et de préférence de l'ordre de 10% molaire.

Après dissolution du métal argent, la poudre est extraite du bain par séparation solide/liquide et on procède à la récupération de l'argent et à la régénération du médiateur redox par électrolyse. A l'électrode négative, l'argent est déposé sous forme métallique sur un substrat qui peut être de l'acier inox, du carbone, du titane, des métaux nobles ou une électrode d'argent. Simultanément, l'électrode positive est le siège d'une oxydation du médiateur redox qui est régénéré. L'électrode peut être indifféremment de l'acier, du carbone ou une électrode à base de métaux nobles. La solution est alors utilisable pour un nouveau traitement.

L'étape d'électrolyse permet simultanément la récupération d'argent sous forme métallique et la régénération du milieu (étape unitaire).

La solution contenant le DES et le médiateur redox régénéré est alors utilisable pour un nouveau cycle de traitement.

De préférence, les étapes i) à iii) sont réalisées sous air, à pression ambiante (1 bar) et/ou à température ambiante (25°C).

### Exemples illustratifs et non limitatifs d'un mode de réalisation :

Essai 1 : Traitement d'une cellule de silicium comprenant de l'argent en milieu DES - Ethaline avec fer 0,5M et à 80°C

L'argent est en contact avec le silicium. Le traitement est réalisé en milieu Ethaline (chlorure de choline ethylène glycol avec un rapport molaire de 1 pour 2) à 80 °C durant 2 heures, avec un volume de 2,5 mL de DES. Le sel ferrique FeCl₃.6H₂O est introduit à 0,5 mol.L⁻¹. Un morceau de cellule est plongé dans le bain DES sous une agitation de 400 tours/min. Après le traitement, une analyse chimique élémentaire est réalisée pour définir la quantité d'argent en solution. On note que 100% de l'argent est dissous avec une vitesse de 12,7 mg.cm⁻².h⁻¹.

Essai 2 : Traitement d'une cellule de silicium comprenant de l'argent en milieu DES - Ethaline avec fer 0,5M et à 23°C

L'argent est disposé en contact avec le silicium. Le traitement est réalisé en milieu Ethaline (chlorure de choline ethylène glycol avec un rapport molaire de 1 pour 2) à 23 °C durant 2 heures, avec un volume de 2,5 mL de DES. Le sel ferrique FeCl₃.6H₂O est introduit à 0,5 mol.L⁻¹. Un morceau de cellule est plongé dans le bain DES sous une agitation de 400 tours/min. Après le traitement, une analyse chimique élémentaire est réalisée pour définir la quantité d'argent en solution. On note que 100% de l'argent est dissous avec une vitesse de 2,3 mg.cm⁻².h⁻¹.

Essai 3 : Traitement d'une cellule de silicium comprenant de l'argent en milieu DES - Ethaline avec fer 0,1 M et à 80°C

L'argent est disposé en contact avec le silicium. Le traitement est réalisé en milieu Ethaline (chlorure de choline ethylène glycol avec un rapport molaire de 1 pour 2) à 80 °C durant 2 heures, avec un volume de 2,5 mL de DES. Le sel ferrique FeCl₃.6H₂O est introduit à 0,1 mol.L⁻¹. Un morceau de cellule est plongé dans le bain DES sous une agitation de 400 tours/min. Après le traitement, une analyse chimique élémentaire est réalisée pour définir la quantité d'argent en solution. On note que 100% de l'argent est dissous avec une vitesse de 25,9 mg.cm⁻².h⁻¹.

Essai 4 : Traitement d'une cellule de silicium comprenant de l'argent en milieu DES - Ethaline (1/3) avec fer 0,5M et à 80°C

L'argent est disposé en contact avec le silicium. Le traitement est réalisé en milieu Ethaline (chlorure de choline ethylène glycol avec un rapport molaire de 1 pour 3) à 80 °C durant 2 heures, avec un volume de 2,5 mL de DES. Le sel ferrique FeCl₃.6H₂O est introduit à 0,5 mol.L⁻¹. Un morceau de cellule est plongé dans le bain DES sous une agitation de 400 tours/min. Après le traitement, une analyse chimique élémentaire est réalisée pour définir la quantité d'argent en solution. On note que 100% de l'argent est dissous avec une vitesse de 7,6 mg.cm⁻².h⁻¹.

Essai 5 : Traitement d'une cellule de silicium comprenant de l'argent en milieu DES - Oxaline avec fer 0,5 M et à 80°C

L'argent est disposé en contact avec le silicium. Le traitement est réalisé en milieu Ethaline (chlorure de choline et acide oxalique dihydraté en équimolaire) à 80 °C durant 2 heures, avec un volume de 2,5 mL de DES. Le sel ferrique FeCl₃.6H₂O est introduit à 0,5 mol.L⁻¹. Un morceau de cellule est plongé dans le bain DES sous une agitation de 400 tours/min. Après le traitement, une analyse chimique élémentaire est réalisée pour définir la quantité d'argent en solution. On note que 100% de l'argent est dissous avec une vitesse de 4,7 mg.cm⁻².h⁻¹.

Essai 6 : Traitement d'une cellule de silicium comprenant de l'argent en milieu DES - Reline avec fer 0,5 M et à 80°C

L'argent est disposé en contact avec le silicium. Le traitement est réalisé en milieu Ethaline (chlorure de cholineet urée en rapport 1 :2) à 80 °C durant 2 heures, avec un volume de 2,5 mL de DES. Le sel ferrique FeCl₃.6H₂O est introduit à 0,5 mol.L⁻¹. Un morceau de cellule est plongé dans le bain DES sous une agitation de 400 tours/min. Après le traitement, une analyse chimique élémentaire est réalisée pour définir la quantité d'argent en solution. On note que 100% de l'argent est dissous avec une vitesse de 11,9 mg.cm⁻².h⁻¹.

Essai 7 : Traitement d'une cellule de silicium comprenant de l'argent en milieu DES - Ethaline avec fer 0,2 M et à 80°C

L'argent est disposé en contact avec le silicium. Le traitement est réalisé en milieu Ethaline (chlorure de choline et ethylène glycol avec un rapport molaire de 1 pour 2) à 80 °C durant 2 heures, avec un volume de 2,5 mL de DES. Le sel ferrique FeCl₃.6H₂O est introduit à 0,2 mol.L⁻¹. Un morceau de cellule est plongé dans le bain DES sous une agitation de 400 tours/min. Après le traitement, une analyse chimique élémentaire est réalisée pour définir la quantité d'argent en solution. On note que 100% de l'argent est dissous avec une vitesse de 50 mg.cm⁻².h⁻¹.

### Essai de récupération électrochimique après traitement d'une cellule de silicium comprenant de l'argent en milieu DES - Ethaline avec fer à 80°C et 0,2 M

L'argent est disposé en contact avec le silicium. Le traitement est réalisé en milieu Ethaline (chlorure de choline et ethylène glycol avec un rapport molaire de 1 pour 2) à 80 °C durant 2 heures, avec un volume de 2,5 mL de DES. Le sel ferrique FeCl₃.6H₂O est introduit à 0,2 mol.L⁻¹. Un morceau de cellule est plongé dans le bain DES sous une agitation de 400 tours/min. Après le traitement, une analyse chimique élémentaire est réalisée pour définir la quantité d'argent en solution. On note que 100% de l'argent est dissous avec une vitesse de 50 mg.cm⁻

Suite à cela, un balayage électrochimique en potentiel est réalisé pour définir la zone de potentiel propice à la récupération de l'argent (Figure 1). Le dépôt d'argent sélectif d'argent peut être réalisé au voisinage de - 0,6 V vs. Fe^{2+/3+}. Un dépôt est donc réalisé à ce potentiel, par maintien potentiostatique, à 400 tours/min et à 80°C. Après 2h de traitement le dépôt est dissout et l'analyse ICP confirme le dépôt exclusif d'argent.

### ANNEXES

[1] Xu, X.H. and C.L. Hussey, Electrodeposition of Silver on Metallic and Nonmetallic Electrodes from the Acidic Aluminum Chloride-1-Methyl-3-Ethytimidazolium Chloride Molten-Salt. Journal of the Electrochemical Society, 1992. 139(5): p. 1295-1300.
[2] Abbott, A.P., et al., Electroless deposition of metallic silver from a choline chloride-based ionic liquid: a study using acoustic impedance spectroscopy, SEM and atomic force microscopy. Physical Chemistry Chemical Physics, 2007. 9(28): p. 3735-3743.
[3] Whitehead, J.A., et al., Application of 1-alkyl-3-methyl-imidozolium ionic liquids in the oxidative leaching of sulphidic copper, gold and silver ores. Hydrometallurgy, 2007. 88(1-4): p. 109-120.
[4] Dong, T.G., et al., Leaching of chalcopyrite with Bronsted acidic ionic liquid. Hydrometallurgy, 2009. 99(1-2): p. 33-38.
[5] EP 3178576

## Revendications

1. Procédé de récupération de l'argent contenu dans des particules, provenant, par exemple, d'un broyat de cellules photovoltaïques, le procédé comprenant les étapes successives suivantes :
i) plonger des particules contenant de l'argent dans une solution comprenant un solvant eutectique profond et un médiateur redox, moyennant quoi on forme des ions argent en solution,
ii) séparer les particules de la solution contenant les ions argent,
iii) réaliser une électrolyse de la solution, moyennant quoi on réduit les ions argent et on régénère le médiateur redox.

2. Procédé selon la revendication 1, **caractérisé en ce que** le solvant eutectique profond est un solvant eutectique profond naturel.

3. Procédé selon la revendication précédente, **caractérisé en ce que** le solvant eutectique profond est l'acide malique:glucose ou l'acide citrique:saccharose.

4. Procédé selon la revendication 1, **caractérisé en ce que** le solvant eutectique profond est formé d'un chlorure de choline et d'un donneur de liaison hydrogène, notamment un glycol.

5. Procédé selon la revendication précédente, **caractérisé en ce que** le solvant eutectique profond est formé d'un chlorure de choline et d'éthylène glycol.

6. Procédé selon la revendication précédente, **caractérisé en ce que** le rapport molaire est chlorure de choline / éthylène glycol est compris entre 1 :2 et 1 :4.

7. Procédé selon l'une quelconque des revendications précédentes, **caractérisé en ce que** les étapes i), ii) et iii) sont réalisées sous air et à une température comprise entre 20°C et 100°C, de préférence entre 20°C et 80°C.

8. Procédé selon l'une quelconque des revendications précédentes, **caractérisé en ce que** le médiateur rédox a une concentration comprise entre 0,1 et 2 mol/L, de préférence entre 0,1 et 0,5mol/L.

9. Procédé selon l'une quelconque des revendications précédentes, **caractérisé en ce que** le médiateur rédox est choisi parmi le fer, le manganèse, le cobalt, le chrome, le vanadium, l'étain, l'argent, le cuivre, le ruthénium, le chlore, le brome et l'iode.

10. Procédé selon l'une quelconque des revendications précédentes, **caractérisé en ce que** le médiateur rédox est un sel de fer (III) ou un sel de cuivre (II), ou un de leurs mélanges.

11. Procédé selon l'une quelconque des revendications précédentes, **caractérisé en ce que** les particules proviennent d'un broyat de cellule photovoltaïque en silicium cristallin ou en silicium polycristallin.

12. Procédé selon l'une quelconque des revendications précédentes, **caractérisé en ce que** la solution contient en outre de l'eau, le pourcentage molaire de l'eau par rapport au solvant eutectique profond étant, de préférence, inférieur à 50%.

13. Procédé selon l'une quelconque des revendications précédentes, **caractérisé en ce que**, préalablement à l'étape i), le procédé comporte, en outre, les étapes suivantes :
a) fournir un panneau photovoltaïque comprenant des câbles, une boîte de jonction, un cadre métallique, des cellules photovoltaïques encapsulées dans une couche de polymère et des connecteurs électriques,
b) éliminer les câbles, la boîte de jonction et le cadre métallique du panneau photovoltaïque,
c) réaliser un traitement thermique, chimique et/ou mécanique pour retirer la couche de polymère encapsulant les cellules photovoltaïques,
d) broyer les cellules photovoltaïques et/ou les connecteurs électriques, de manière à former des particules contenant de l'argent,
e) réaliser une étape de désaluminisation sur les particules contenant l'argent, l'étape de désaluminisation étant réalisée dans une solution acide à un pH compris entre 1 et 4.
